# EUROPÄISCHE PATENTSCHRIFT

(11) **EP 3 514 287 B1**
(45) Veröffentlichungstag und Bekanntmachung des Hinweises auf die Patenterteilung: **03.07.2024**
(21) Anmeldenummer: 19151563.4
(22) Anmeldetag: 14.01.2019
(51) Int. Cl.: E02D 29/14, E02D 29/12, H02G 9/10

(54) **RAHMEN FÜR EINEN KABELSCHACHT**
FRAME FOR A CABLE SHAFT
CADRE POUR UNE CONDUITE DE CÂBLE

(30) Priorität: 19.01.2018 DE 102018101153
(43) Veröffentlichungstag der Anmeldung: 24.07.2019
(73) Patentinhaber: Langmatz GmbH, 82467 Garmisch-Partenkirchen (DE)
(72) Erfinder:
(74) Vertreter: Prinz & Partner mbB

(56) Entgegenhaltungen:
- EP-A2- 2 072 689
- DE-A1- 1 659 794
- DE-A1- 2 621 640
- DE-A1-102011 116 874
- DE-U1-202013 101 956
- GB-A- 2 526 343
- US-A- 2 350 018
- US-A- 4 145 857

## Beschreibung

Die Erfindung betrifft einen Rahmen für einen Kabelschacht.

Der Kabelschacht ist dafür vorgesehen, in den Boden eingelassen zu werden, um beispielsweise Verteiler für Kupfer- und/oder Glasfaserkabel aufzunehmen. Die wesentlichen Bestandteile eines solchen Schachts sind die Seitenwände, ein am oberen Rand der Seitenwände angeordneter Rahmen sowie ein Deckel. Ein Beispiel für einen solchen Kabelschacht und den dabei verwendeten Rahmen ist aus der EP 2 604 758 A1 bekannt.

Der Rahmen hat üblicherweise eine rechteckige Form und besteht aus mehreren Schenkeln, die miteinander verbunden sind. An mindestens einer Stelle wird eine Schweißnaht verwendet, um ein Ende eines Schenkels mit einem Anfang eines anderen Schenkels zu verbinden.

Alternative Gestaltungen von Kabelschächten gehen aus der DE 10 2011 116 874 A1, der US 2 350 018 A, der US 4 145 857 A und der EP 2 072 689 A2 hervor. Dabei sind die DE 10 2011 116 874 A1, die US 2 350 018 A und die US 4 145 857 A auf die Verbindung von Wänden des Kabelschachts gerichtet. Die EP 2 072 689 A2 zeigt einen Kabelschacht ohne separaten Rahmen.

Die Aufgabe der Erfindung besteht darin, einen hinsichtlich der Handhabung verbesserten Rahmen für einen solchen Kabelschacht zu schaffen.

Zur Lösung der Aufgabe ist erfindungsgemäß ein Rahmen für einen Kabelschacht vorgesehen, mit mindestens einem ersten Rahmenteil und einem zweiten Rahmenteil, die so miteinander verbunden sind, dass eine Ecke des Rahmens gebildet ist, wobei ein Verbindungselement vorgesehen ist, das gegenüber einem Ausgangszustand derart plastisch verformt ist, dass die beiden Rahmenteile fest miteinander verbunden sind. Dabei ist das Verbindungselement einstückig mit einem der Rahmenteile ausgeführt, wobei es sich durch eine Öffnung im anderen Rahmenteil hindurcherstreckt. Die Erfindung beruht auf dem Grundgedanken, anstelle einer Schweißnaht (also einer stoffschlüssigen Verbindung) eine rein mechanische Verbindung der Rahmenteile zu verwenden. Dies hat verschiedene Vorteile. Zum einen ist das Verschweißen vergleichsweise aufwendig. Daher wird ein Rahmen aus dem Stand der Technik nicht in Einzelteilen an seinen späteren Einsatzort geliefert und dort zusammengeschweißt, sondern herstellerseitig verschweißt und dementsprechend in einem Zustand transportiert, in dem er vergleichsweise viel Platz benötigt. Die erfindungsgemäß vorgesehene mechanische Verbindung zeichnet sich dagegen dadurch aus, dass sie sehr einfach hergestellt werden kann, nämlich durch einfaches plastisches Verformen des Verbindungselements. Dies kann auch von einem Monteur vor Ort passieren, sodass der Rahmen platzsparend in zwei oder mehr Einzelteilen transportiert und dann am Einsatzort fertig montiert werden kann. Zur Montage wird lediglich das Verbindungselement des einen Rahmenteils durch die Öffnung im anderen Rahmenteil hindurchgesteckt und die Lasche verdrillt. Die beiden Rahmenteile sind dann bereits fertig aneinander montiert.

Vorzugsweise ist vorgesehen, dass das Verbindungselement die beiden Rahmenteile elastisch miteinander verspannt. Hierdurch kann eine solche Vorspannung auf die beiden Rahmenteile aufgebracht werden, dass diese sehr stabil miteinander verbunden sind.

Gemäß einer bevorzugten Ausführungsform ist das Verbindungselement eine verdrillte Lasche aus Metall. Es hat sich herausgestellt, dass diese auf den ersten Blick sehr simple Ausgestaltung es ermöglicht, zwei Vorteile miteinander zu kombinieren: Zum einen "verkürzt" sich die Lasche, wenn sie verdrillt (also um ihre Längsachse verdreht) wird, sodass dadurch automatisch eine Vorspannung auf die beiden miteinander zu verbindenden Rahmenteile aufgebracht wird. Zum anderen kann eine Lasche jederzeit vor Ort mit einfachsten Werkzeugen von Hand verdrillt werden, sodass der Rahmen ohne Spezialwerkzeug oder besondere Kenntnisse sehr schnell fertigmontiert werden kann.

In einer einfachen Ausgestaltung ist vorgesehen, dass die verdrillte Lasche an ihrem freien Ende eine Werkzeugaussparung aufweist, in die beispielsweise ein Schraubendreher eingesteckt werden kann. Dadurch ist ein Hebel geschaffen, mit dem das zum Verdrillen der Lasche nötige Drehmoment sehr einfach aufgebracht werden kann.

Das Verbindungselement befindet sich im Ausgangszustand vorzugsweise in derselben Ebene wie der Abschnitt des Rahmens, von dem aus es sich erstreckt. Somit kann das Verbindungselement bei Herstellung des entsprechenden Rahmenteils einfach mit ausgestanzt werden, ohne dass anschließende Nachbearbeitungsschritte wie ein Biegevorgang notwendig sind.

Die Erfindung wird nachfolgend anhand zweier Ausführungsformen beschrieben, die in den beigefügten Zeichnungen dargestellt sind. In diesen zeigen:
- Figur 1 in einer Explosionsansicht schematisch einen erfindungsgemäßen Kabelschacht;
- Figur 2 in einer perspektivischen Ansicht den Rahmen von Figur 1 gemäß einer Variante, die nicht Teil der Erfindung ist;
- Figur 3 in einer Seitenansicht ein Rahmenteil des Rahmens von Figur 2 im abgewickelten Zustand;
- Figur 4 eine perspektivische Außenansicht einer Ecke des Rahmens von Figur 2 in einem Zwischenzustand;
- Figur 5 eine zweite perspektivische Ansicht der Ecke von Figur 4, wobei der Rahmen hier fertig montiert ist;
- Figur 6 in einer vergrößerten perspektivischen Ansicht die in den Figuren 4 und 5 gezeigte Ecke;
- Figur 7 eine perspektivische Innenansicht der Ecke von Figur 4;
- Figur 8 in einer perspektivischen Ansicht ein beim Rahmen von Figur 2 verwendetes Verbinderbauteil;
- Figur 9 in einer perspektivischen Ansicht einen Rahmen gemäß einer Ausführungsform der Erfindung;
- Figur 10 in einer perspektivischen Ansicht die für den Rahmen von Figur 9 verwendeten Rahmenteile vor der Fertigmontage;
- Figur 11 in einer vergrößerten Ansicht eine Ecke des Rahmens von Figur 9; und
- Figur 12 in einer Seitenansicht ein beim Rahmen von Figur 9 verwendetes Seitenteil im abgewickelten Zustand.

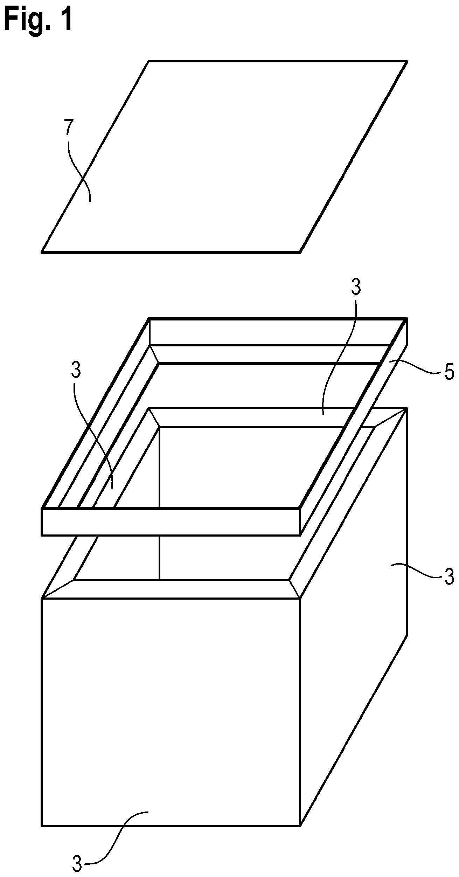

In Figur 1 ist schematisch ein Kabelschacht gezeigt, der als wesentliche Bestandteile mehrere Seitenteile 3, einen oberhalb der Seitenteile 3 angeordneten Rahmen 5 sowie einen Deckel 7 aufweist.

Der Kabelschacht ist dafür vorgesehen, im Erdboden angeordnet zu werden, sodass in seinem Inneren ein Verteiler beispielsweise für ein Telekommunikationsnetz angeordnet werden kann. Die Seitenteile 3 umschließen dabei einen im Querschnitt rechteckigen Raum. Der Rahmen 5 ist entweder unmittelbar auf den Seitenteilen angeordnet oder auf einem (hier nicht gezeigten) Kopfrahmen, der zwischen dem Rahmen 5 und den Seitenteilen 3 angeordnet ist. Der Deckel 7 ist im Rahmen angeordnet und verschließt den Kabelschacht.

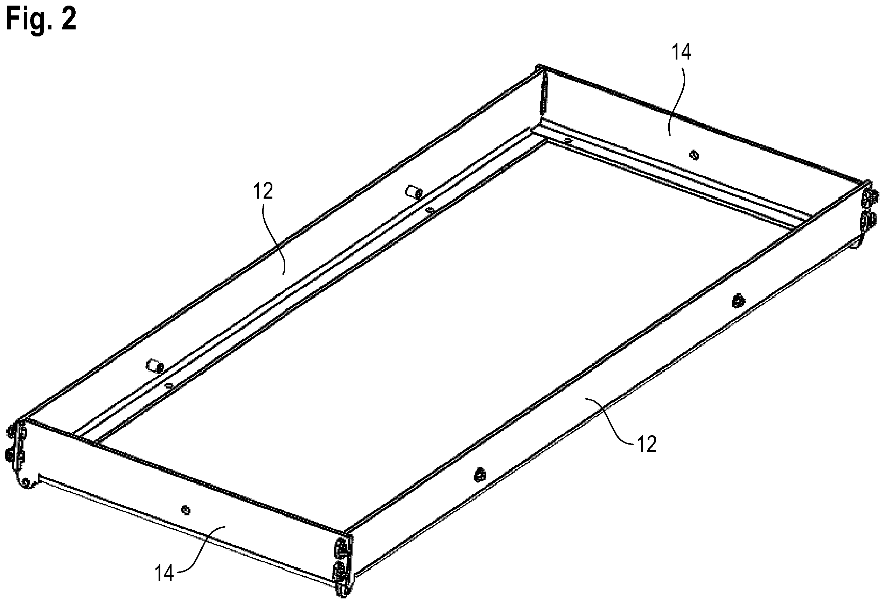

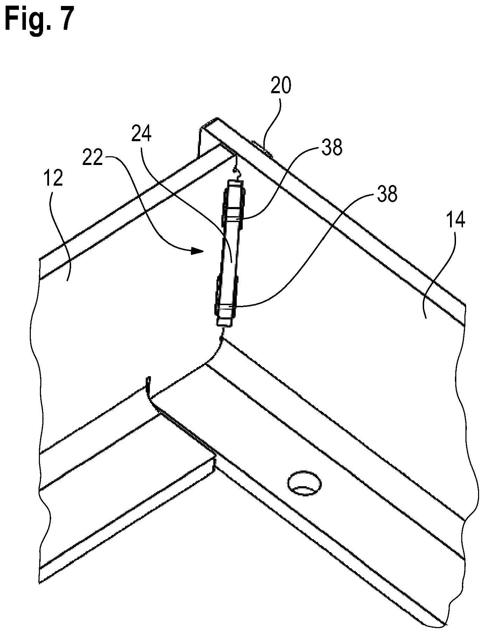

In den Figuren 2 bis 8 ist eine erste Variante des Rahmens 3 gezeigt, die nicht Teil der Erfindung ist. Diese Variante dient lediglich zur Erläuterung einiger Merkmale der Erfindung.

Der Rahmen 3 besteht hier aus insgesamt vier Rahmenteilen, wobei zwei Rahmenteile 12 eines ersten Typs und zwei Rahmenteile 14 eines zweiten Typs verwendet werden. Die beiden Rahmenteile 12 bilden hier die längeren Schenkel des Rahmens, während die beiden Rahmenteile 14 die kürzeren Schenkel bilden.

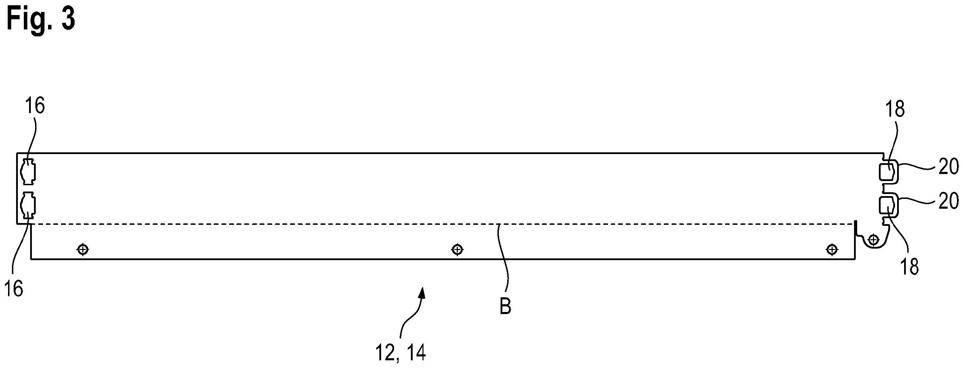

In Figur 3 ist beispielhaft die Abwicklung eines Rahmenteils 12, 14 gezeigt. Es handelt sich allgemein ausgedrückt um einen langgestreckten Blechstreifen, der entlang einer hier gestrichelt angedeuteten Biegelinie B so abgekantet wird, dass ein den Seitenteilen 3 zugewandter Rand des Rahmens gebildet ist. An voneinander entgegengesetzten Seiten ist das Rahmenteil 12, 14 mit Öffnungen 16, 18 versehen. Dabei sind die Öffnungen 18 jeweils in einem Vorsprung 20 angeordnet, dessen Breite in vertikaler Richtung, also senkrecht zur Längserstreckungsrichtung des Rahmenteils 12, 14, geringfügig kleiner ist als die Weite der Öffnung 16 eines benachbarten Rahmenteils in vertikaler Richtung. Die Vorsprünge 20 können also in die Öffnungen 16 eingesteckt werden.

Am Beispiel des Rahmens von Figur 2 sind die beiden Vorsprünge 20 mit der darin angeordneten Öffnung 18 eines Rahmenteils 12 in die Öffnungen 16 eines angrenzenden Rahmenteils 14 eingesteckt. Dementsprechend sind die am anderen Ende dieses Rahmenteils 14 angeordneten Vorsprünge 20 in die Öffnungen 16 des benachbarten zweiten Rahmenteils 12 eingesteckt, und so weiter.

Alternativ wäre es grundsätzlich auch möglich, an einem der Rahmenteile 12 oder 14 entweder Vorsprünge 20 an beiden entgegengesetzten Enden oder Öffnungen 16 an beiden entgegengesetzten Enden vorzusehen, und dementsprechend das andere Rahmenteil 14 bzw. 12 mit der jeweils anderen Gestaltung zu versehen.

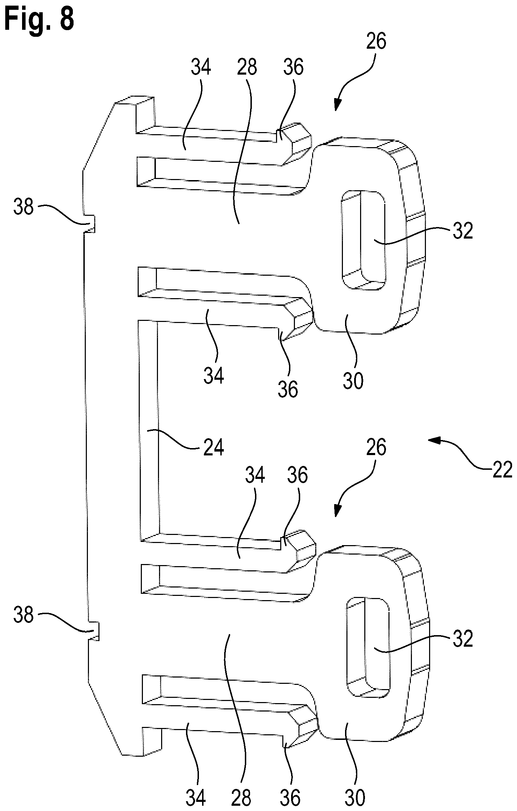

Um die Rahmenteile 12, 14 miteinander zu verbinden, wird ein Verbinderbauteil 22 verwendet, das im Detail in Figur 8 gezeigt ist.

Das Verbinderbauteil 22 ist separat von den Rahmenteilen 12, 14 ausgeführt. Es kann sich insbesondere um ein gestanztes Bauteil handeln.

Als Material für das Verbinderbauteil 22 wird ein Edelstahl verwendet. Für die Rahmenteile 12, 14 wird verzinkter Stahl verwendet.

Das Verbinderbauteil 22 weist ein Querteil 24 auf, an dem zwei Verbindungselemente 26 angeordnet sind. Der Abstand der Verbindungselemente 26 voneinander entspricht dem Abstand der Öffnungen 16, 18 voneinander.

Jedes Verbindungselement besteht aus einem Verdrillabschnitt 28 und einem Kopfteil 30. Die Breite jedes Kopfteils 30 ist geringfügig kleiner als die Weite der Öffnung 18.

Jedes Kopfteil 30 ist mit einer Werkzeugaussparung 32 versehen.

Beiderseits jedes Verbindungselements 26 ist jeweils eine Rastlasche 34 vorgesehen, deren freies, also vom Querteil 24 abgewandtes Ende mit einem Rasthaken 36 versehen ist.

Schließlich ist das Querteil 24 auf der von den Verbindungselementen 26 abgewandten Seite mit zwei Nuten 38 versehen, die etwa auf Höhe des Verdrillabschnittes 28 liegen.

Bei der Montage werden die Vorsprünge 20 an einem Ende eines Rahmenteils durch die Öffnungen 16 eines anderen Rahmenteils hindurchgesteckt. Dann wird das Verbinderbauteil 22 so von der Innenseite des Rahmens montiert, dass die Verbindungselemente 26 sich durch die beiden Öffnungen 18 und damit auch durch die beiden Öffnungen 16 hindurcherstrecken. Dadurch liegen die beiden Kopfteile 30 auf der Außenseite der von den beiden aufeinandertreffenden Rahmenteilen 12, 14 gebildeten Ecke. Gleichzeitig rasten die Rasthaken 36 im Winkel zwischen den Vorsprüngen 20 und dem auf der Außenseite des Rahmenteils liegenden Rand der Öffnung 16 ein.

Falls das Verbinderbauteil 22 nicht so weit durch die Öffnung 16, 18 hindurchgesteckt werden kann, dass die Rasthaken 36 einschnappen, kann in den Nuten 38 ein Schraubendreher angesetzt werden, sodass mit einem leichten Hammerschlag nachgeholfen werden kann.

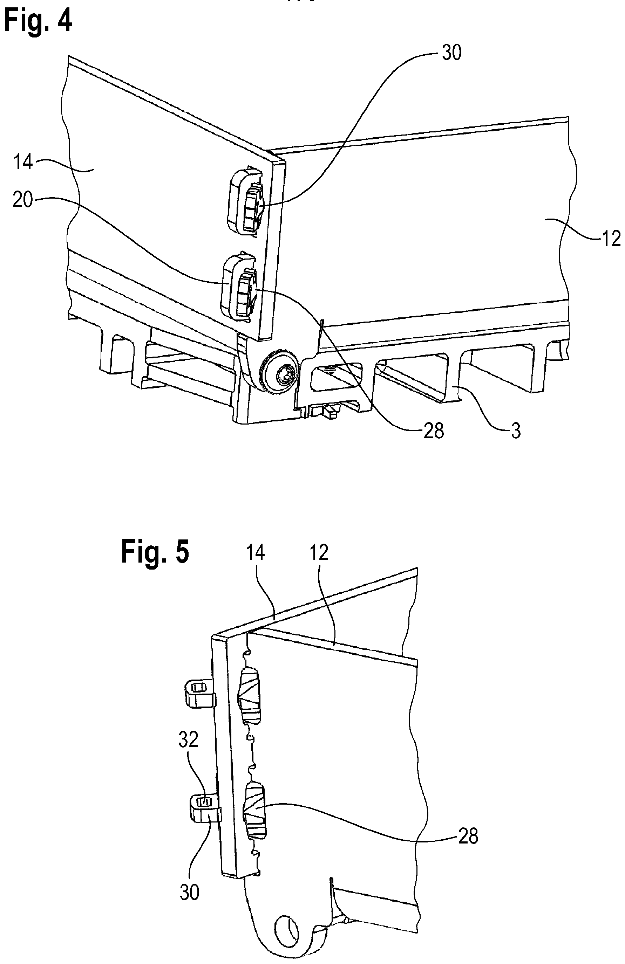

Sobald die Rasthaken 36 eingeschnappt sind, sind die beiden Rahmenteile 12, 14 miteinander sowie das Verbinderbauteil 22 an der entsprechenden Ecke vormontiert. Dieser Zustand ist in Figur 4 zu sehen

Im nächsten Schritt werden die Verbindungselemente 26 geeignet plastisch verformt, sodass die Rahmenteile 12, 14 mechanisch zuverlässig miteinander verbunden sind.

Konkret erfolgt dies dadurch, dass das Kopfteil 30 jedes Verbindungselements 26 um etwa 90° gegenüber dem Ausgangszustand verdreht wird.

Hierbei wird der Verdrillabschnitt 28 plastisch verformt, sodass die Kopfteile 30 von allein in einer Verriegelungsstellung verbleiben würden.

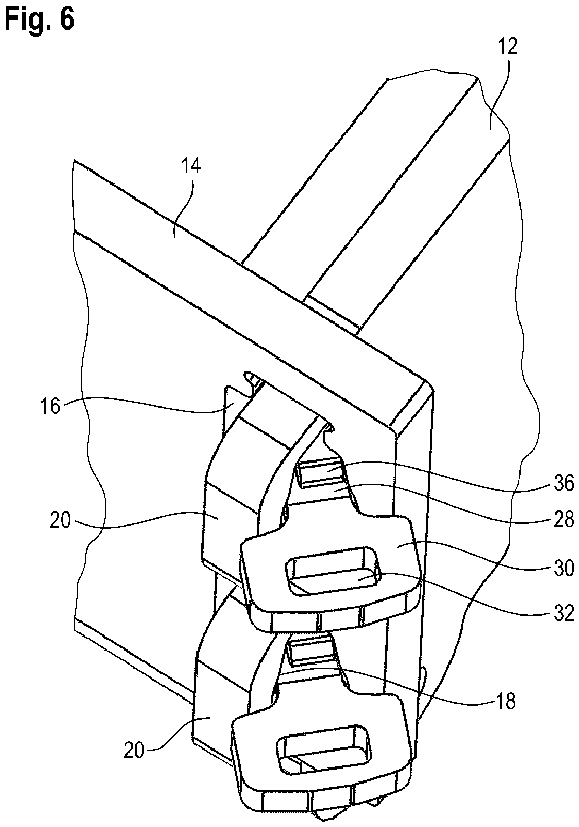

Hinzukommt, dass der Verdrillabschnitt 28 sich beim Verdrillen "verkürzt", sodass die beiden Rahmenteile 12, 14 zwischen dem auf der Innenseite der entsprechenden Ecke angeordneten Querteil 24 des Verbinderbauteils 22 und den auf der Außenseite angeordneten Kopfteile 30 eingespannt werden. Die Kopfteile 30 stützen sich dabei auf der Außenseite der Vorsprünge 20 sowie der Außenkante des mit den Öffnungen 16 versehenen Rahmenteils ab (siehe die Figuren 5 und 6).

Selbst bei hohen Belastungen können sich die Kopfteile 30 nicht zurückdrehen, da die dabei wirkenden Belastungen kein Drehmoment auf die Kopfteile 30 ausüben, sondern lediglich eine Zugwirkung auf den Verdrillabschnitt 28. Hinzu kommt die aufgrund der wirkenden Zugkräfte entstehende Reibung zwischen den Kopfteilen und den Rahmenteilen 12, 14.

Um die Kopfteile 30 aus der Ausgangsstellung, in der sie sich parallel mit dem Querteil 24 erstrecken (siehe Figur 8) in die Verriegelungsstellung zu bringen, kann ein Werkzeug, beispielsweise ein Schraubendreher, in die Werkzeugaussparung 32 eingesteckt werden, sodass in sehr einfacher Weise das nötige Drehmoment aufgebracht werden kann.

Es ist auch denkbar, hierfür eine Zange oder einen Gabelschlüssel zu verwenden.

Nachdem die Rahmenteile 12, 14 in allen Ecken miteinander verbunden sind, kann der Rahmen auf die Seitenteile 3 aufgesetzt werden. Dabei kann er entweder unmittelbar mit den Seitenteilen 3 verschraubt werden, oder es kann ein Kopfteil dazwischengesetzt werden.

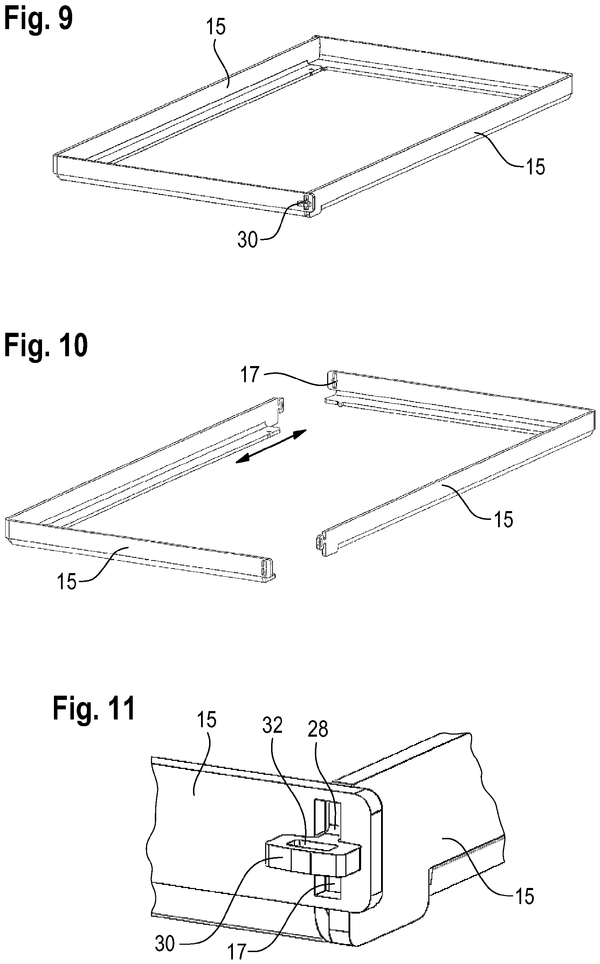

In den Figuren 9 bis 12 ist ein Rahmen gemäß einer Ausführungsform der Erfindung gezeigt.

Der Unterschied zwischen der ersten und der zweiten Ausführungsform besteht darin, dass bei der zweiten Ausführungsform lediglich zwei Rahmenteile 15 verwendet werden, wobei jedes Rahmenteil L-förmig mit einem längeren und einem kürzeren Schenkel ist.

Ein weiterer Unterschied zwischen der ersten und der zweiten Ausführungsform besteht darin, dass bei der zweiten Ausführungsform das Verbindungselement 26 nicht an einem von den Rahmenteilen getrennten Verbinderbauteil angebracht ist, sondern einstückig an einem Ende jedes Rahmenteils 15.

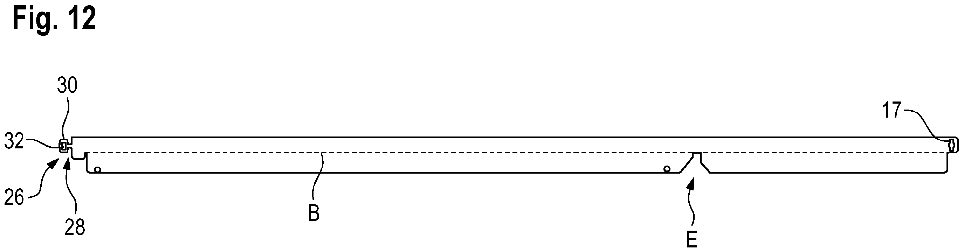

Jedes Rahmenteil 15 ist hier ein Blechbiegeteil aus einem Zuschnitt, der in Figur 12 gezeigt ist. Dieser kann in einem Bereich E um 90° abgebogen werden, sodass die L-Form des Rahmenteils 15 (siehe Figur 10) erhalten wird. Zusätzlich kann um die Biegelinie B abgekantet werden.

Jedes Rahmenteil 15 weist an einem Ende eine Öffnung 17 auf, durch die das Verbindungselement 26 hindurchgesteckt werden kann.

Ähnlich wie bei der ersten Ausführungsform weist auch hier das Verbindungselement einen Verdrillabschnitt 28 sowie ein Kopfteil 30 auf. Das Kopfteil 30 ist mit einer Werkzeugaussparung 32 versehen. Im Unterschied zur ersten Ausführungsform ist der Verdrillabschnitt 28 bei der zweiten Ausführungsform etwas kürzer ausgeführt. Wie in Figur 10 zu sehen ist, werden die beiden Rahmenteile 15 bei der Montage so ineinandergeschoben, dass sich die beiden Verbindungselemente 26 durch die beiden Öffnungen 17 erstrecken. Anschließend werden die beiden Kopfteile 30 um 90° verdreht, sodass sie sich im Verriegelungszustand (siehe insbesondere Figur 11) befinden. Auch hier "verkürzt" sich der Verdrillabschnitt 28 der beiden Verbindungselemente 26, sodass das Kopfteil 30 das eine Rahmenteil 15 elastisch mit dem anderen Rahmenteil 15 verspannt.

Bei Bedarf kann das Verbindungselement 26 wieder so verformt werden, dass die Rahmenteile voneinander gelöst werden können. Dies ist bei einer Demontage des Kabelschachts vorteilhaft, da dann der Rahmen nicht mit einer Trennscheibe zerlegt werden muss, sondern mit geringem Aufwand in seine Einzelteile auseinandergebaut werden kann.

Vorteilhaft ist dies auch im Falle einer Beschädigung eines Schenkels des Rahmens. Es kann dann der entsprechende Schenkel vor Ort ausgebaut und ersetzt werden.

## Patentansprüche

1. Rahmen (3) für einen Kabelschacht, mit mindestens einen ersten Rahmenteil (12, 14; 15) und einem zweiten Rahmenteil (14, 12; 15), die so miteinander verbunden sind, dass eine Ecke des Rahmens gebildet ist, wobei ein Verbindungselement (26) vorgesehen ist, das gegenüber einem Ausgangszustand derart plastisch verformt ist, dass die beiden Rahmenteile (12, 14; 15) fest miteinander verbunden sind, **dadurch gekennzeichnet, dass** das Verbindungselement (26) einstückig mit einem der Rahmenteile (15) ausgeführt ist und sich durch eine Öffnung (17) im anderen Rahmenteil (15) hindurchstreckt.

2. Rahmen nach Anspruch 1, **dadurch gekennzeichnet, dass** das Verbindungselement (26) die beiden Rahmenteile (12, 14; 15) elastisch miteinander verspannt.

3. Rahmen nach Anspruch 1 oder Anspruch 2, **dadurch gekennzeichnet, dass** das Verbindungselement (26) eine verdrillte Lasche aus Metall ist.

4. Rahmen nach einem der vorhergehenden Ansprüche, **dadurch gekennzeichnet, dass** das Verbindungselement (26) an seinem freien Ende eine Werkzeugaussparung (32) aufweist.

5. Rahmen nach einem der vorherigen Ansprüche, **dadurch gekennzeichnet, dass** das Verbindungselement (26) sich im Ausgangszustand in derselben Ebene befindet wie der Abschnitt des Rahmens (15), von dem aus es sich erstreckt.

## Claims

1. A frame (3) for a cable shaft, comprising at least one first frame part (12, 14; 15) and one second frame part (14, 12; 15) which are connected to each other such that a corner of the frame is formed, wherein a connecting element (26) is provided which is plastically deformed as compared to an initial state such that the two frame parts (12, 14; 15) are firmly connected to each other, **characterized in that** the connecting element (26) is configured in one piece with one of the frame parts (15) and extends through an opening (17) in the other frame part (15).

2. The frame according to claim 1, **characterized in that** the connecting element (26) elastically braces the two frame parts (12, 14; 15) to each other.

3. The frame according to claim 1 or claim 2, **characterized in that** the connecting element (26) is a twisted tab made of metal.

4. The frame according to any of the preceding claims, **characterized in that** the connecting element (26) has a tool recess (32) at its free end.

5. The frame according to any of the preceding claims, **characterized in that** in the initial state the connecting element (26) is located in the same plane as the portion of the frame (15) from which it extends.

## Revendications

1. Cadre (3) pour un puits à câbles, comprenant au moins une première partie de cadre (12, 14 ; 15) et une deuxième partie de cadre (14, 12 ; 15) qui sont reliées l'une à l'autre de sorte qu'un coin du cadre est formé, un élément de raccordement (26) étant prévu, lequel est déformé plastiquement par rapport à un état initial de telle sorte que les deux parties de cadre (12, 14 ; 15) sont solidaires l'une à l'autre, **caractérisé en ce que** l'élément de raccordement (26) est réalisé d'un seul tenant avec l'une des parties de cadre (15) et s'étend à travers un orifice (17) dans l'autre partie de cadre (15).

2. Cadre selon la revendication 1, **caractérisé en ce que** l'élément de raccordement (26) serrent les deux parties de cadre (12, 14 ; 15) élastiquement l'une contre à l'autre.

3. Cadre selon la revendication 1 ou la revendication 2, **caractérisé en ce que** l'élément de raccordement (26) est une patte torsadée en métal.

4. Cadre selon l'une des revendications précédentes, **caractérisé en ce que** l'élément de raccordement (26) présente à son extrémité libre un évidement d'outil (32).

5. Cadre selon l'une des revendications précédentes, **caractérisé en ce que** l'élément de raccordement (26), à l'état initial, se trouve dans le même plan que le tronçon du cadre (15) à partir duquel il s'étend.
